# EUROPÄISCHE PATENTSCHRIFT

(11) **EP 1 919 649 B1**
(45) Veröffentlichungstag und Bekanntmachung des Hinweises auf die Patenterteilung: **30.12.2009**
(21) Anmeldenummer: 06760828.1
(22) Anmeldetag: 18.08.2006
(51) Int. Cl.: B23K 11/31

(54) **ZANGENAUSGLEICHENDE PUNKTSCHWEISSZANGE MIT EINER EIN BOGENFÖRMIGES VERBINDUNGSELEMENT AUFWEISENDEN AUSGLEICHEINHEIT**
SPOT WELDING TONGS WITH A BALANCING UNIT COMPRISING A CURVED CONNECTOR ELEMENT
PINCE A SOUDER PAR POINTS A EQUILIBRAGE POURVUE D'UNE UNITE D'EQUILIBRAGE PRESENTANT UN ELEMENT DE LIAISON ARQUE

(30) Priorität: 23.08.2005 AT 13922005
(43) Veröffentlichungstag der Anmeldung: 14.05.2008
(73) Patentinhaber: Fronius International GmbH, 4643 Pettenbach (AT)
(72) Erfinder: KRONEGGER, Wolf, A-4655 Vorchdorf (AT); SCHIEFERMÜLLER, Robert, A-4611 Buchkirchen (AT); STIEGLBAUER, Walter, A-4901 Manning (AT)
(74) Vertreter: Sonn & Partner Patentanwälte
(86) Internationale Anmeldenummer: PCT/AT2006/000345
(87) Internationale Veröffentlichungsnummer: WO 2007/022553

(56) Entgegenhaltungen:
- WO-A-02/078892
- DE-A1- 10 344 056
- GB-A- 2 279 423

## Beschreibung

Die Erfindung betrifft eine Punktschweißzange mit Zangenausgleich, mit einem Zangengrundkörper, zwei Zangenarmen und einer Ausgleichseinheit, welche einen der Zangenarme mit dem Zangengrundkörper beweglich verbindet und zur Umwandlung einer Drehbewegung in eine Linearbewegung ausgebildet ist, wobei die Ausgleichseinheit aus einer Antriebseinheit und einem Verbindungselement besteht, und das Verbindungselement an einer an der Antriebseinheit befestigten Exzenterscheibe exzentrisch und drehbar befestigt ist.

Eine derartige Punktschweißzange ist beispielsweise aus der WO 02/078892 A1 bekannt, wobei die Ausgleichsbewegung durch eine Antriebseinheit, welche über einen Exzenter mit einem Verbindungselement verbunden ist, bewerkstelligt wird, indem die Drehbewegung der Antriebseinheit in eine Längsbewegung des Verbindungselements umgewandelt wird.

Auch aus der DE 103 44 056 A1 geht eine derartige Punktschweißzange mit einer Ausgleichseinheit hervor, bei der ein Ausgleichsantrieb über ein Exzentergetriebe mit den Anlenkhebeln der Schweißzange verbunden ist. Darüber hinaus ist die Punktschweißzange so gestaltet, dass auf einen eigenen Ausgleichsantrieb verzichtet werden kann, indem dieser durch einfache mechanische Hilfsmittel ersetzt wird.

Aus dem Stand der Technik sind Ausgleichseinheiten bekannt, welche die Drehbewegung über ein Gewinde in eine Linearbewegung umwandeln. Beispielsweise ist aus der DE 202 14 970 U1 eine Roboterschweißzange mit Ausgleichsvorrichtung bekannt, bei der ein Elektromotor eine Spindel antreibt und die daraus resultierende Linearbewegung als Ausgleichsbewegung für die Zangenarme einer Schweißzange herangezogen wird. Da hierbei die Spindel selbsthemmend wirkt, ist die Ausgleichseinheit mit elastischen Elementen wie Federn ausgeführt, damit eine Federung der Ausgleichsbewegung ermöglicht wird.

Nachteilig ist hierbei, dass bei einer derartigen Ausführung der Ausgleichseinheit zusätzliche elastische Elemente für die Federung der Ausgleichsbewegung erforderlich sind. Dies erhöht den konstruktiven Aufwand und den Aufwand für die Wartung. Außerdem kommt es bei derartigen Spindelantrieben vermehrt zu thermischen Problemen, welche auf hohe Reibverluste aufgrund des Spindelantriebes zurückzuführen sind.

Die Aufgabe der Erfindung liegt darin, eine Punktschweißzange mit Zangenausgleich zu schaffen, bei welcher die Ausgleichseinheit auf einfache Art und Weise die Drehbewegung eines Elektromotors in eine Linearbewegung, also eine Ausgleichsbewegung, eines Zangenarms umwandelt. Die Nachteile des Standes der Technik sollen vermieden oder zumindest reduziert werden.

Eine Punktschweißzange gemäß der Erfindung ist im Anspruch 1 definiert.

In vorteilhafter Weise wird durch die erfindungsgemäße Ausbildung der Ausgleichseinheit nach den Ansprüchen 2 bis 5 eine selbsthemmende Wirkung der Ausgleichseinheit verhindert, wodurch keine zusätzlichen Elemente mit federnder Wirkung benötigt werden.

Durch die Maßnahme, dass die Antriebseinheit am Zangengrundkörper oder an einem der Zangenarme angeordnet ist, wird in vorteilhafter Weise die Möglichkeit einer flexiblen Anordnung der Antriebseinheit bzw. der Ausgleichseinheit geschaffen.

In vorteilhafter Weise wird durch das Messelement am Verbindungselement erreicht, dass für eine exakt definierte Ausgleichskraft eine exakte, kraftbezogene Ansteuerung erreicht wird.

Die vorliegende Erfindung wird anhand der beigefügten, schematischen Zeichnungen näher erläutert. Darin zeigen:
Fig. 1 die Ansicht einer Punktschweißzange in Ausgangsposition mit einer erfindungsgemäßen Ausgleichseinheit, schematisch und vereinfacht dargestellt;
Fig. 2 die Punktschweißzange gemäß Fig. 1 positioniert an einem Werkstück;
Fig. 3 die Punktschweißzange gemäß Fig. 1 mit einem Zangenarm in Kontakt mit dem Werkstück;
Fig. 4 die Punktschweißzange gemäß Fig. 1 bei der Durchführung einer Widerstandsschweißung;
Fig. 5 den Aufbau der erfindungsgemäßen Ausgleichseinheit in schematischer Darstellung;
Fig. 6 die Ausgleichseinheit gemäß Fig. 5 in einer Stellung der Ausgleichsbewegung; und
Fig. 7 die Ausgleichseinheit gemäß Fig. 5 in einer weiteren Stellung der Ausgleichsbewegung.

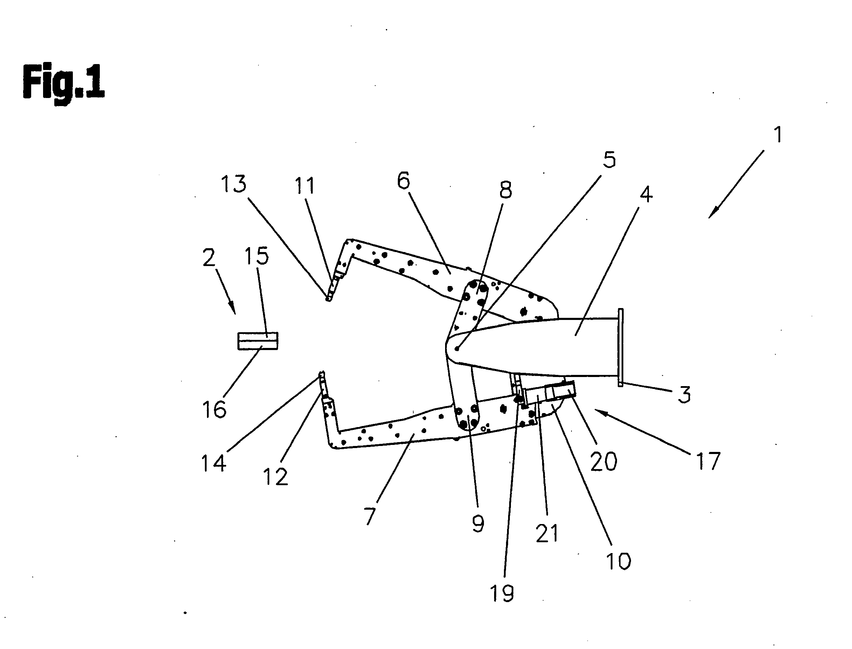

In Fig. 1 ist eine Punktschweißzange 1 zum Widerstandsschweißen von Werkstücken 2 dargestellt, wobei die Punktschweißzange 1 bevorzugt von einem Roboter manipuliert wird. Die Befestigung erfolgt über einen Roboterflansch 3, welcher am Ende eines Zangengrundkörpers 4 angebracht ist. Das andere Ende des Zangengrundkörpers 4 ist derart ausgeführt, dass ein Bolzen 5 eine Drehachse für die gesamte Punktschweißzange 1 bildet, um welche ein Zangenarm 6 und ein weiterer Zangenarm 7 über einen Schwenkarm 8, 9 am Bolzen 5 drehbar gelagert sind. Zwischen dem Bolzen 5 und dem Roboterflansch 3 sind die Zangenarme 6, 7 über einen Hauptantrieb 10 miteinander verbunden. Dadurch wird eine sogenannte X-Punktschweißzange 1 gebildet. Im vorderen Bereich der Zangenarme 6, 7, insbesondere am vorderen Ende, ist jeweils ein Elektrodenhalter 11, 12 für die Aufnahme jeweils einer Elektrode 13, 14 angeordnet.

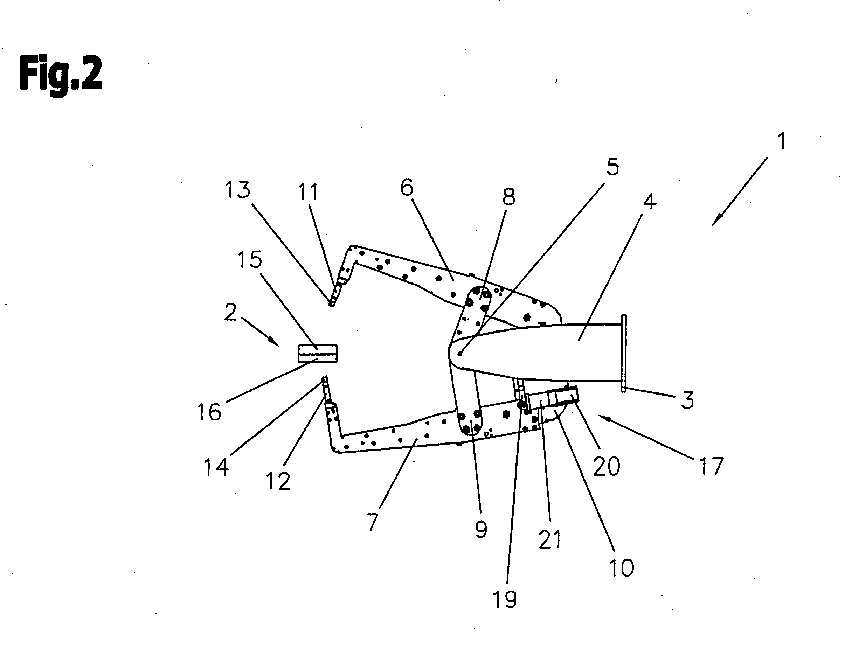

Zwischen den Elektroden 13, 14 befindet sich während des Schweißprozesses das zu schweißende Werkstück 2, welches beispielsweise aus zwei Bauteilen 15, 16 gebildet ist. Zur Durchführung der Schweißung muss die Punktschweißzange 1 zuerst vom Roboter positioniert werden. Hierzu befindet sich die Punktschweißzange 1 entsprechend Fig. 1 in geöffnetem Zustand, also in einer Ausgangsposition bzw. in einer Grundstellung. In den Fig. 2 bis 4 sind die einzelnen Arbeitsschritte der Punktschweißzange 1 bis zur Durchführung der Widerstandsschweißung dargestellt.

Bevor der Roboter die Punktschweißzange 1 an einer Schweißposition der vorfixierten Bauteile 15, 16 positionieren kann, müssen die Zangenarme 6, 7 ausreichend geöffnet sein. Dies erfolgt durch den Hauptantrieb 10, welcher die Zangenarme 6, 7 grundsätzlich gegengleich bewegt. Die Öffnung der Zangenarme 6, 7 erfolgt unter Berücksichtigung der Form der Bauteile 15, 16, der Toleranz der Bauteile 15, 16 und der Positioniergenauigkeit des Roboters.

Ebenso wird bei der Öffnung berücksichtigt, dass der Roboter einen Ausgangspunkt bzw. einen Referenzpunkt benötigt, damit die Zangenarme 6, 7 berührungslos in die Schweißposition des Werkstücks 2 gebrachtwerden können. Beispielsweise ist der Referenzpunkt an der Kontaktfläche der Elektrode 14 mit dem Bauteil 16 definiert. Damit nun die Kontaktfläche der Elektrode 14 den Referenzpunkt einnimmt, ist der Zangenarm 7, an welchem die Elektrode 14 montiert ist, über eine Ausgleichseinheit 17 mit dem Zangengrundkörper 4 verbunden. Durch eine entsprechende Ansteuerung der Ausgleichseinheit 17, welche durch die Steuerung der Punktschweißzange 1 erfolgt, wird der Zangenarm 7 bzw. die Kontaktfläche der Elektrode 14 am Referenzpunkt gehalten. Dadurch ist gewährleistet, dass die Punktschweißzange 1 in jeder möglichen Schweißlage auf gleicher Position gehalten wird.

Somit bewirkt die Ausgleichseinheit 17, dass die Punktschweißzange 1 bzw. die Zangenarme 6, 7, insbesondere während des Positioniervorgangs des Roboters, ständig auf gleicher Position gehalten werden. Dadurch kann der Roboter die Punktschweißzange 1 bzw. die Zangenarme 6, 7 problemlos, insbesondere berührungslos, an die gewünschte Schweißposition der Bauteile 15, 16 positionieren.

Beim Positioniervorgang wird nun der Referenzpunkt bzw. die Kontaktfläche der Elektrode 14 in einer bestimmte Distanz, beispielsweise 2 cm, unter der Schweißposition der Bauteile 15, 16 positioniert, wie dies aus Fig. 2 ersichtlich ist. An der Schweißpositionen werden die Elektroden 13, 14 so positioniert, dass diese im Wesentlichen normal auf die zu verschweißenden Bauteile 15, 16 stehen. Nach erfolgter Positionierung erfolgt eine Meldung des Roboters an eine Zangensteuerung, worauf die Widerstandsschweißung durchgeführt werden kann. Zur Durchführung der Widerstandsschweißung an der Schweißposition der Bauteile 15, 16 werden die Zangenarme 6, 7 zueinander bewegt. Dabei gibt es unterschiedliche Möglichkeiten, die Ausgleichseinheit 17 anzusteuern.

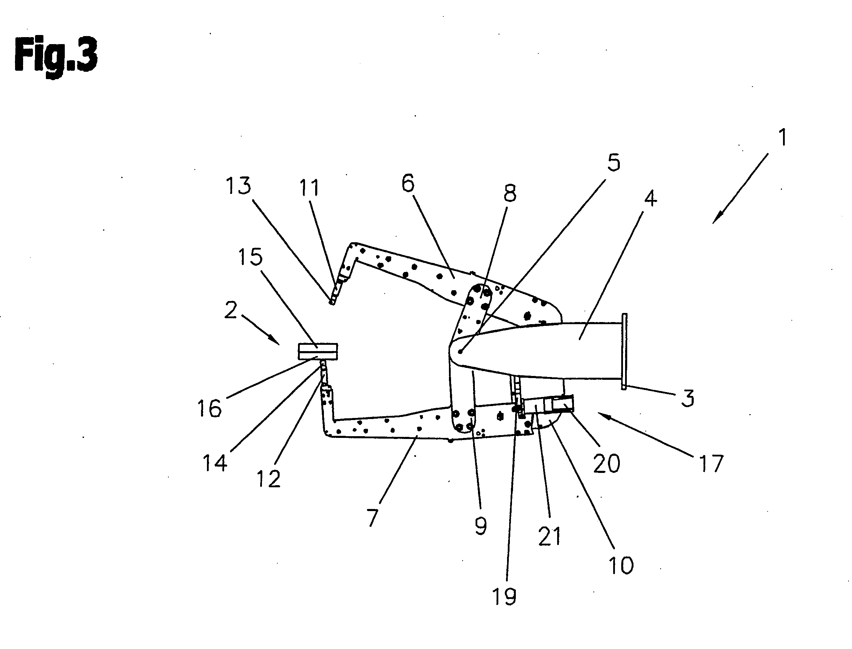

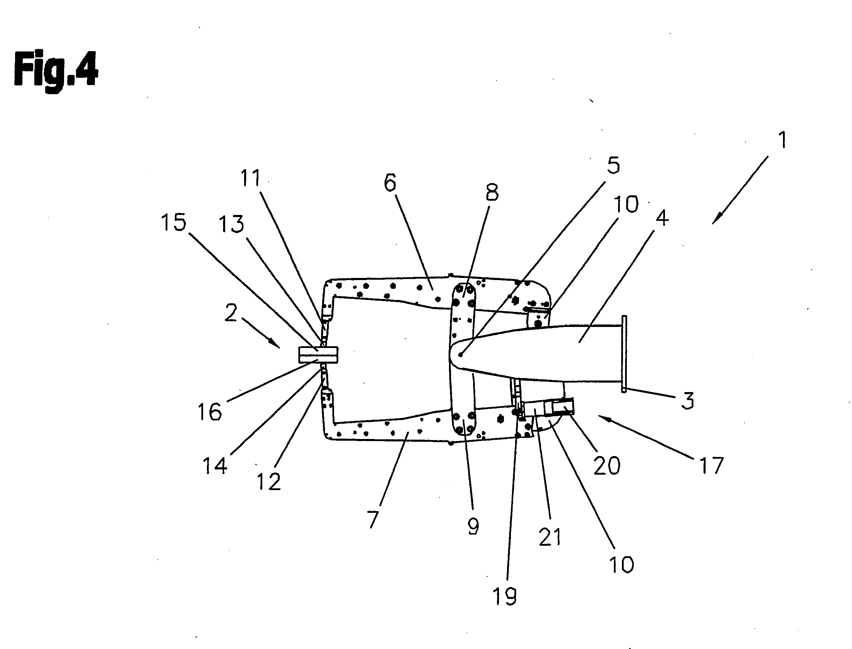

Beispielsweise erfolgt die Widerstandsschweißung gemäß Fig. 3 derart, dass die Ausgleichseinheit 17 den Zangenarm 7 bzw. die Elektrode 14 zum Bauteil 16 bewegt, bis die Elektrode 14 mit einer.vordefinierten Kraft, welche über einen Kraftsensor oder über die Auswertung des Motorstromes der Ausgleichseinheit 17 ermittelt wird, an dem Bauteil 16 anliegt. In dieser Position wird der Zangenarm 7 durch eine entsprechende Ansteuerung der Ausgleichseinheit 17 bis zum Ende des Schweißvorgangs gehalten. Anschließend bewegt der Hauptantrieb 10 den Zangenarm 6 bzw. die Elektrode 13 zum Bauteil 15, bis der nötige, vordefinierte Druck an den Bauteilen 15, 16 zwischen den Elektroden 13, 14 ausgeübt wird, wie dies aus Fig. 4 ersichtlich ist. Nun wird zur Durchführung der Widerstandsschweißung der Bauteile 15, 16 ein bestimmter elektrischer Strom, welcher von einem Schweißgerät geliefert wird, durch die Elektroden 13, 14 geleitet.

Ebenso ist es möglich, dass die Widerstandsschweißung derart erfolgt, dass der Zangenarm 6 vom Hauptantrieb 10 bis auf einen definierten Abstand, welcher im Wesentlichen dem Abstand zwischen der Elektrode 14 und dem Bauteil 16, also beispielsweise 2 cm, entspricht, zum Bauteil 15 bewegt wird. Anschließend wird die Ausgleichseinheit 17 bevorzugt ab einem gewissen Schließwinkel der Punktschweißzange 1 deaktiviert bzw. beispielsweise stromlos geschaltet. Dadurch zentrieren sich die Zangenarme 6, 7 am Werkstück 2 und der Hauptantrieb 10 übt den nötigen, vordefinierten Druck zur Durchführung der Widerstandsschweißung aus. Bei dieser Bewegungsart wird also durch das Freischalten der Ausgleichseinheit 17 erreicht, dass jener Zangenarm 6 oder 7, an dem die Ausgleichseinheit 17 eingreift, sich frei bewegen lässt und somit ein selbstständiges Anliegen der Elektroden 13, 14 an den Bauteilen 15, 16 erreicht wird.

Bei einer weiteren Variante zur Durchführung der Widerstandsschweißung erfolgt die Ansteuerung der Ausgleichseinheit 17 derart, dass diese beispielsweise mit einem vordefinierten Strom beaufschlagt wird. Die Höhe des Stroms ist derart gewählt, dass die Punktschweißzange 1 in Position gehalten wird, jedoch begrenzt beweglich ist. Dadurch wird eine Federung der Ausgleichsbewegung ermöglicht, welche eine Deformation des Werkstücks 2 bzw. der Bauteile 15, 16 verhindert. Ebenso, wie zuvor beschrieben, zentrieren sich die Zangenarme 6, 7 am Werkstück 2 und der Hauptantrieb 10 übt den nötigen, vordefinierten Druck zur Durchführung der Widerstandsschweißung aus.

Nach der Widerstandsschweißung wird die Punktschweißzange 1 bzw. werden die Zangenarme 6, 7 wieder in die ursprüngliche Position gemäß Fig. 2 zurückbewegt. Ebenso kann die Punktschweißzange 1 wieder in die Grundstellung gemäß Fig. 1 zurückbewegt werden. Weiters kann die Punktschweißzange 1 nach dem Zurückbewegen gemäß Fig. 1 oder 2 zur nächsten Schweißposition der Bauteile 15, 16 bewegt werden.

Erfindungsgemäß ist die Ausgleichseinheit 17 zur Durchführung der beschriebenen Varianten einer Widerstandsschweißung derart ausgebildet, dass die Ausgleichseinheit 17 aus einer Antriebseinheit 18 und einem an der Antriebseinheit 18 exzentrisch angeordneten Verbindungselement 19 besteht. Hierbei bewirkt das Verbindungselement 19 die Umwandlung einer Drehbewegung der Antriebseinheit 18 in eine Linearbewegung eines Zangenarmes 6 oder 7. Die erforderliche Federung der Ausgleichsbewegung der Ausgleichseinheit 17 wird durch eine entsprechende Ansteuerung der Antriebseinheit 18 erzielt. Somit ist ein einfacher Aufbau der Ausgleichseinheit 17 gegeben, wodurch der Wartungsaufwand minimal gehalten wird.

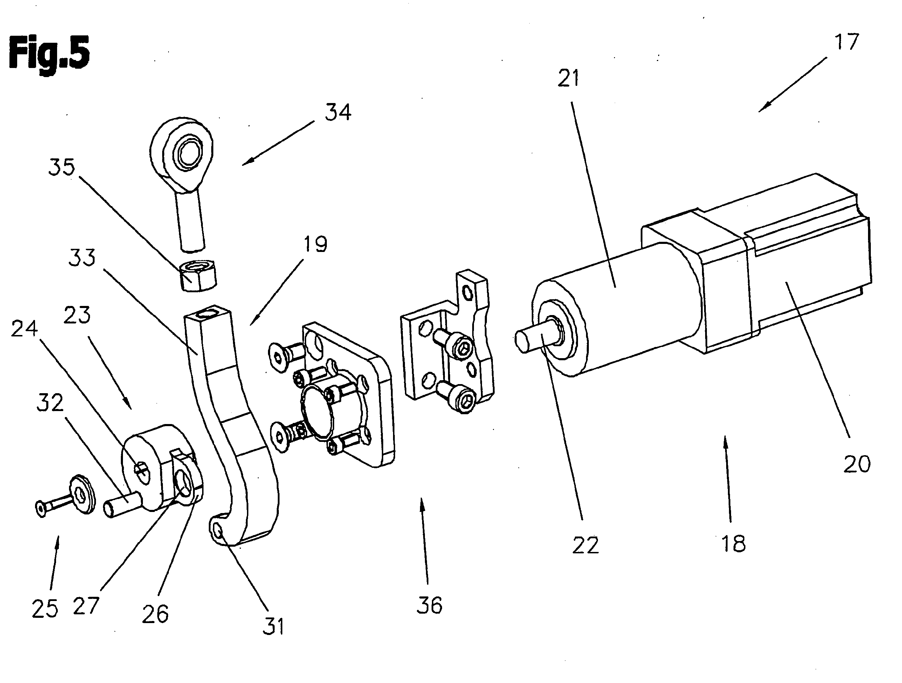

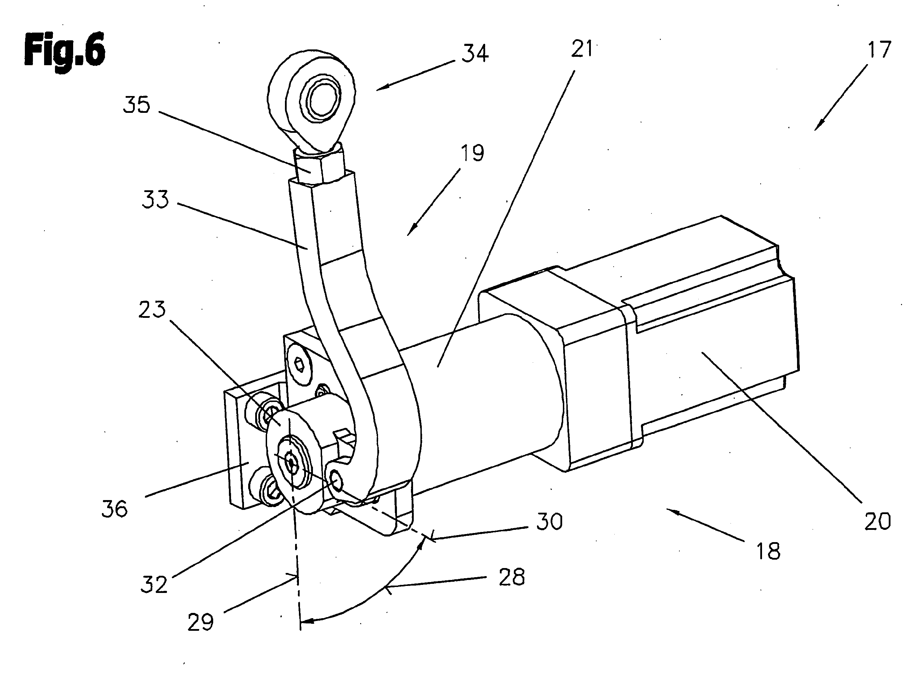

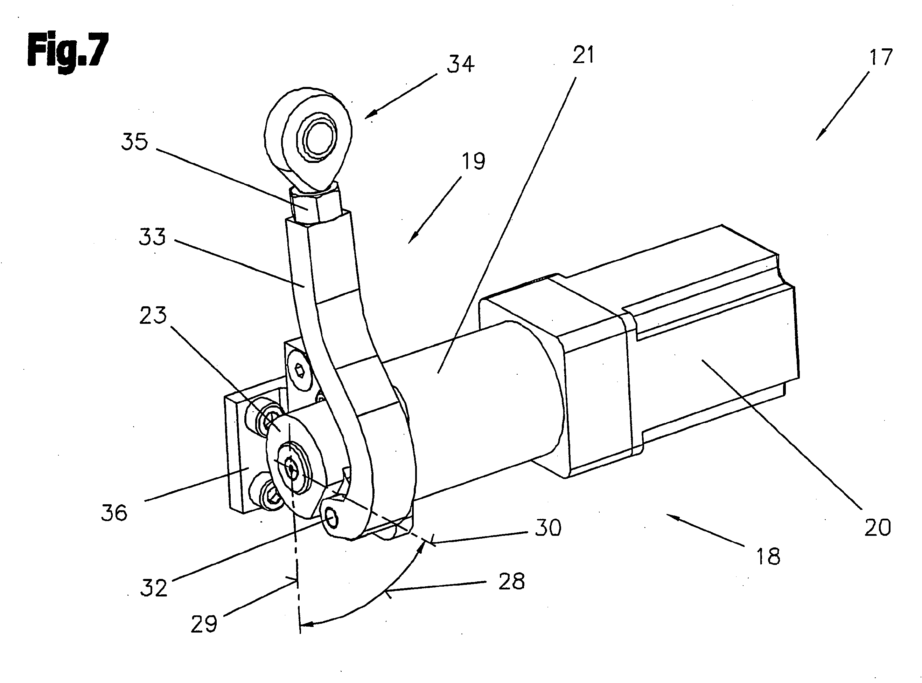

Ein Aufbau der erfindungsgemäßen Ausgleichseinheit 17 ist aus Fig. 5 ersichtlich. In den Fig. 6 und 7 wird die Ausgleichseinheit 17 in unterschiedlichen Stellungen für eine Ausgleichsbewegung dargestellt.

Im Wesentlichen wird die Antriebseinheit 18 der Ausgleichseinheit 17 aus einem Elektromotor 20 und einem Getriebe 21, bevorzugt einem Planetengetriebe, gebildet. Die Antriebseinheit 18, insbesondere der Elektromotor 20, führt über eine Welle 22 eine Drehbewegung aus, welche über das Verbindungselement 19 in eine Linearbewegung umgewandelt wird. Hierzu ist an der Welle 22 eine Exzenterscheibe 23 befestigt und entsprechend gelagert. Die Exzenterscheibe 23 ist über eine Ausnehmung 24 im Mittelpunkt drehfest an der Welle 22 über eine Befestigungsvorrichtung 25, beispielsweise eine Schraube und eine Scheibe, befestigt. Dadurch dreht sich die Exzenterscheibe 23 entsprechend der Welle 22. Weiters ist an der Exzenterscheibe 23 ein Hebel 26 angeordnet, welcher eine Bohrung 27 zur Befestigung des Verbindungselements 19 aufweist. Durch die exzentrische Anordnung der Bohrung 27 an der Exzenterscheibe 23 erfolgt die Umwandlung der Drehbewegung der Exzenterscheibe 23 über das an der Bohrung 27 befestigte Verbindungselement 19 in die Linearbewegung, also der Ausgleichsbewegung.

Für die Ausgleichsbewegung, wie aus Fig. 6 und 7 ersichtlich, ist im Wesentlichen ein Drehbereich 28 von beispielsweise 90° der Exzenterscheibe 23 bzw. des Hebels 26 ausreichend. Be-vorzugt befindet sich der Drehbereich 28 zwischen der 270°- Stellung des Hebels 23, also einer unteren Endstellung 29 lot-recht unterhalb der Ausnehmung 24, und der 360°-Stellung des Hebels 26, also einer oberen Endstellung 30 waagrecht der Ausnehmung 24. Damit das Verbindungselement 19 diese Drehbewegung in eine Linearbewegung umwandeln kann, ist dieses dementsprechend geformt. Demnach weist das Verbindungselement 19 zwei Formen auf. Jener Endbereich, welcher am Hebel 26 befestigt wird, ist gemäß der Erfindung im Wesentlichen korrespondierend zur Exzenterscheibe 23 gebogen, wobei eine Bohrung 31 vorgesehen ist. Die Bohrung 31 dient zur drehbaren Befestigung des Verbindungselements 19 an der Bohrung 27 des Hebels 26 über einen Bolzen 32. Hierzu weist der bogenförmige Endbereich des Verbindungselements 19 eine Ausnehmung auf, welche korrespondierend zum Hebel 26 ausgeführt ist. Somit umschließt der bogenförmige Endbereich des Verbindungselements 19 den Hebel 26. Der dem bogenförmigen Endbereich des Verbindungselementes 19 gegenüberliegende Endbereich ist als Steg 33 ausgebildet. Der Steg 33 dient beispielsweise zur beweglichen Befestigung am Zangengrundkörper 4. Bevorzugt erfolgt die bewegliche Befestigung des Steges 33 über eine Augenschraube 34 oder ein Pleuel, welches beispielsweise mit einem Gewinde am Steg 33 lösbar befestigt ist. Durch das Gewinde kann auch eine Justierung des Abstandes erreicht werden. Zur Befestigung der Augenschraube 34 am Steg 33 weist dieser ein Innengewinde auf, wobei zusätzlich eine Mutter 35 als sogenannte Kontermutter zur Befestigung eingesetzt wird. Durch eine derartige Ausbildung der Ausgleichseinheit 17 kann die Drehbewegung der Antriebseinheit 18 bzw. der an der Welle 22 befestigten Exzenterscheibe 23 über das am Hebel 26 drehbar gelagerte und befestigte Verbindungselement 19 in eine Linearbewegung umgewandelt werden. Hierzu ist beispielsweise die Antriebseinheit 18 am Zangenarm 7 montiert und die mit dem Steg 33 des Verbindungselements 19 verbundene Augenschraube 34 am Zangengrundkörper 4 befestigt. Ebenso kann die Antriebseinheit 18 am Zangenarm 6 befestigt sein, oder die Augenschraube 34 an einem der Zangenarme 6, 7 und die Antriebseinheit 18 entsprechend am Zangengrundkörper 4. Unabhängig der Anordnung der Ausgleichseinheit 17 führt diese die erforderlichen Ausgleichsbewegungen durch.

Die Ausgleichsbewegung des Zangenarms 7 erfolgt durch das Heben bzw. Senken der Antriebseinheit 18, welche in der Längsachse des Zangenarmes 7 montiert ist. Hierbei stellt die Augenschraube 34 einen ortsfesten, jedoch drehbaren, Drehpunkt für die Ausgleichseinheit 17 dar.

Damit das Heben bzw. Senken der Zangenarme 6, 7 durch die Ausgleichseinheit 17 mit möglichst geringem Kraftaufwand des Elektromotors 20 erfolgt, ist eine Justierung der Ausgleichseinheit 17 erforderlich. Der geringste Kraftaufwand für den Elektromotor 20 ist im Wesentlichen im Drehbereich 28 gegeben. Daher ist es von Vorteil, dass die Drehbewegung des Elektromotors 20 bzw. des Hebels 26 für die Ausgleichsbewegung, d.h. vom Referenzpunkt bis zur Berührung mit dem Bauteil 16, im Drehbereich 28 erfolgt.

Den Referenzpunkt benötigt der Roboter zur Positionierung der Punktschweißzange 1, wobei den Referenzpunkt, wie bereits bekannt, beispielsweise die Kontaktfläche der Elektrode 14 darstellt. Aus dem Referenzpunkt ergibt sich eine Lage des Zangenarmes 7, an welchem die Antriebseinheit 18 beispielsweise über einen Befestigungswinkel 36, welcher aus mehreren Teilen bestehen kann, montiert ist. Daraus resultiert die Länge für das Verbindungselement 19, wobei die Länge über das Gewinde der Augenschraube 34 bzw. dem Innengewinde im Steg 33 eingestellt wird. Die korrekte Länge ist eingestellt, wenn der bogenförmige Endbereich des Verbindungselements 19 im Bereich der oberen Endstellung 30 am Hebel 26 befestigt werden kann. Zur Befestigung der Bohrung 31 an der Bohrung 27 wird die Exzenterscheibe 23 entsprechend an der Welle 22 befestigt, oder durch entsprechende Ansteuerung des Elektromotors 20 derart positioniert. Beispielsweise ist für den Referenzpunkt die Stellung des Hebels 26 nahe der oberen Endstellung 30, wie aus Fig. 6 ersichtlich. Ebenso ist es möglich, dass für den Referenzpunkt die Stellung des Hebels 26 im mittleren Bereich des Drehbereichs 28 liegt.

Somit ergibt sich nach erfolgter Ausgleichsbewegung, d.h. wenn die Kontaktfläche der Elektrode 14 am Bauteil 16 anliegt, beispielsweise eine Stellung des Hebels 26 im mittleren Bereich des Drehbereichs 28, wie in Fig. 7 dargestellt. Ebenso ist es möglich, entsprechend der Stellung des Hebels 26 für den Referenzpunkt, dass sich eine Stellung des Hebels 26 nach der Ausgleichsbewegung nahe der unteren Endstellung 29 des Drehbereichs 28 ergibt.

Nach der Justierung der Ausgleichseinheit 17, d.h. dass sich der Hebel 26 im Drehbereich 28 bewegt, kann eine Widerstandsschweißung durchgeführt werden. Ebenso ist durch die Justierung der Referenzpunkt definiert und der Steuerung des Roboters bekannt. Die Steuerung des Roboters ist wiederum mit einer Steuerung der Punktschweißzange 1 und der Ausgleichseinheit 17, also der Zangensteuerung, und einer Steuerung des Schweißgerätes verbunden.

Somit kann der Roboter die Punktschweißzange 1 an der Schweißposition der Bauteile 15, 16 zur Widerstandsschweißung positionieren. Anschließend wird zuerst die Antriebseinheit 18 bzw. der Elektromotor 20 derart angesteuert, dass sich der Hebel 26 in Richtung der unteren Endstellung 29 im Drehbereich 28 bewegt, wie aus Fig. 7 ersichtlich, also die Ausgleichsbewegung durchführt. Somit bewegt sich der Zangenarm 7 bzw. die Elektrode 14 zum Bauteil 16, wie bereits zu Fig. 3 beschrieben, da der Steg 33 des Verbindungselements 19 über die Augenschraube 34 ortsfest am Zangegrundkörper 4 befestigt ist und die Antriebseinheit 18 am Zangenarm 7 montiert ist. Die Ausgleichsbewegung gemäß Fig. 3 kann auch derart erfolgen, dass der Zangenarm 7 mit einer vordefinierten Kraft an das Bauteil 16 angelegt wird. Hierzu ist beispielsweise im Bereich des Steges 33 ein Kraftmesssensor oder ein Dehnungsmessstreifen angebracht. Dieser sendet dann der Zangensteuerung ein Signal, sobald die vordefinierte Kraft erreicht ist. Ebenso ist es möglich, die Ausgleichsbewegung derart durchzuführen, dass der bogenförmige Endbereich des Verbindungselements 19 an der Exzenterscheibe 23 anschlägt. Dies wird dadurch erreicht, dass sich das Verbindungselement 19 bei der Ausgleichsbewegung zur Exzenterscheibe 23 bewegt. Damit der Anschlag des Verbindungselements 19 an der Exzenterscheibe 23 definiert erfolgt, kann beispielsweise eine Schraube oberhalb des Hebels 26 oder entsprechend am Verbindungselement 19 integriert sein. Durch das Verdrehen der Schraube wird erreicht, dass der Anschlag und somit die Position der Elektrode 14 eingestellt werden kann. Somit kann die Widerstandsschweißung durchgeführt werden, indem der Hauptantrieb 10 die Zangenarme 6, 7 mit einer vordefinierten Schweißkraft schließt. Nach erfolgter Widerstandsschweißung der Bauteile 15, 16, wie bereits zu Fig. 4 beschrieben, wird der Zangenarm 7 vom Hauptantrieb 10 geöffnet. Anschließend wird der Hebel 26 bzw. die Kontaktfläche der Elektrode 14 durch die entsprechende Ansteuerung der Antriebseinheit 18 wieder am Referenzpunkt positioniert und gehalten. Somit kann der Roboter die Punktschweißzange 1 an der nächsten zu schweißenden Position positionieren und die entsprechende Widerstandsschweißung durchführen.

Durch eine derartige Ausbildung der Ausgleichseinheit 17 und deren Positionierung bzw. Justierung an der Punktschweißzange 1, resultiert ein kurzer Weg für die Ausgleichsbewegung im Drehbereich 28. Daraus ergibt sich ein minimaler Kraftaufwand für die Antriebseinheit 18.

Der Kraftaufwand für den Elektromotor 20 kann zusätzlich durch die Verwendung des Getriebes 21 minimiert werden. Hierbei ist die Antriebseinheit 18 derart ausgebildet, dass die Drehbewegung des Elektromotors 18 von dem Getriebe 21 dementsprechend übersetzt wird und die Exzenterscheibe 23 vom Getriebe 21 entsprechend gedreht wird.

Durch eine Reduktion des Kraftaufwandes für den Elektromotor 20, zur Durchführung der Ausgleichsbewegung, wird aber auch erreicht, dass die thermische Belastung des Elektromotors 20 minimiert wird. Somit wird auch die Lebensdauer des Elektromotors 20 bzw. der gesamten Antriebseinheit 18 erhöht.

Die erfindungsgemäße Ausgleichseinheit 17 für die Punktschweißzange 1 kann für sämtliche Ausführungsformen der Punktschweißzange 1 eingesetzt werden. Daher beispielsweise auch für eine Punktschweißzange 1 in C-Form bzw. für eine C-Punktschweißzange. Für den Einsatz der Ausgleichseinheit 17 für unterschiedliche Ausführungsformen der Punktschweißzange 1, kann die Form des Verbindungselementes 19 entsprechend angepasst werden.

## Patentansprüche

1. Punktschweißzange (1) mit Zangenausgleich, mit einem Zangengrundkörper (4), zwei Zangenarmen (6, 7) und einer Ausgleichseinheit (17), welche einen der Zangenarme (6, 7) mit dem Zangengrundkörper (4) beweglich verbindet und zur Umwandlung einer Drehbewegung in eine Linearbewegung ausgebildet ist, wobei die Ausgleichseinheit (17) aus einer Antriebseinheit (18) und einem verbindungselement (19) besteht, und das Verbindungselement (19) an einer an der Antriebseinheit (18) befestigten Exzenterscheibe (23) exzentrisch und drehbar befestigt ist, **dadurch gekennzeichnet, dass** ein Teil der Exzenterscheibe (23) als Hebel (26) mit einer Bohrung (27) zur Befestigung des Verbindungselementes (19) ausgebildet ist, und das Verbindungselement (19) in einem Endbereich, welcher am Hebel durch eine Bohrung (31) befestigt ist, im Wesentlichen korrespondierend zur Exzenterscheibe (23) bogenförmig ausgebildet ist.

2. Punktschweißzange (1) nach Anspruch 1, **dadurch gekennzeichnet, dass** die Exzenterscheibe (23) eine im Mittelpunkt angeordnete Ausnehmung (24) zur verdrehsicheren Befestigung an der Antriebseinheit (18) aufweist.

3. Punktschweißzange (1) nach Anspruch 1 oder 2, **dadurch gekennzeichnet, dass** das Verbindungselement (19) im gegenüberliegenden Endbereich des bogenförmigen Endbereichs als Steg (33) ausgebildet ist und ein Befestigungselement zur ortsfesten und beweglichen Befestigung aufweist.

4. Punktschweißzange (1) nach Anspruch 3, **dadurch gekennzeichnet, dass** das Befestigungselement (19) als Augenschraube (34) ausgebildet ist.

5. Punktschweißzange (1) nach Anspruch 4, **dadurch gekennzeichnet, dass** die Augenschraube (34) lösbar am Verbindungselement (19) befestigt ist.

6. Punktschweißzange (1) nach einem der Ansprüche 1 bis 5, **dadurch gekennzeichnet, dass** die Antriebseinheit (18) am zangengrundkörper (4) angeordnet ist.

7. Punktschweißzange nach einem der Ansprüche 1 bis 5, **dadurch gekennzeichnet, dass** die Antriebseinheit (18) an einem der Zangenarme (6, 7) angeordnet ist.

8. Punktschweißzange (1) nach einem der Ansprüche 1 bis 7, **dadurch gekennzeichnet, dass** die Antriebseinheit (18) aus einem Elektromotor (20) gebildet ist.

9. Punktschweißzange (1) nach einem der Ansprüche 1 bis 7, **dadurch gekennzeichnet, dass** die Antriebseinheit (18) aus einem Elektromotor (20) und einem Getriebe (21) gebildet ist.

10. Punktschweißzange (1) nach einem der Ansprüche 1 bis 9, **dadurch gekennzeichnet, dass** die Antriebseinheit (18) mit einer Steuereinheit verbunden ist.

11. Punktschweißzange (1) nach Anspruch 10, **dadurch gekennzeichnet, dass** die Steuereinheit in einer Steuerung für die Punktschweißzange (1) integriert ist.

12. Punktschweißzange (1) nach einem der Ansprüche 1 bis 11, **dadurch gekennzeichnet, dass** am Verbindungselement (19) im Bereich des Steges (33) ein Messelement angeordnet ist und dieses mit der Steuereinheit verbunden ist.

13. Punktschweißzange (1) nach Anspruch 12, **dadurch gekennzeichnet, dass** das Messelement durch einen Kraftmesssensor gebildet ist.

14. Punktschweißzange (1) nach Anspruch 12, **dadurch gekennzeichnet, dass** das Messelement durch einen Dehnungsmessstreifen gebildet ist.

## Claims

1. Spot welding tongs (1) with tong compensation, including a tong base body (4), two tong arms (6, 7) and a compensation unit (17) movably connecting one of the tong arms (6, 7) with the tong base body (4) and designed to convert a rotational movement into a linear movement, wherein the compensation unit (17) is composed of a drive unit (18) and a connector element (19), and wherein the connector element (19) is eccentrically and rotatably fastened to an eccentric disk (23) fastened to the drive unit (18), **characterized in that** a portion of the eccentric disk (23) is designed as a lever (26) including a bore (27) for fixing the connector element (19), and wherein in an end region fastened to the lever through a bore (31), the connector element (19) is designed to be curved to substantially correspond to the eccentric disk.

2. Spot welding tongs (1) according to claim 1, **characterized in that** the eccentric disk (23) comprises a recess (24) provided in its center for fixation to the drive unit (18) against rotation.

3. Spot welding tongs (1) according to claim 1 or 2, **characterized in that** the connector element (19), in the end region located opposite the curved end region, is designed as a web (33) and comprises a fastening element for the stationary and movable fixation.

4. Spot welding tongs (1) according to claim 3, **characterized in that** said fastening element (19) is designed as an eyebolt (34).

5. Spot welding tongs (1) according to claim 4, **characterized in that** the eyebolt (34) is detachably fastened to the connector element (19).

6. Spot welding tongs (1) according to any one of claims 1 to 5, **characterized in that** the drive unit (18) is arranged on the tong base body (4).

7. Spot welding tongs (1) according to any one of claims 1 to 5, **characterized in that** the drive unit (18) is arranged on one of the tong arms (6, 7).

8. Spot welding tongs (1) according to any one of claims 1 to 7, **characterized in that** the drive unit (18) is comprised of an electric motor (20).

9. Spot welding tongs (1) according to any one of claims 1 to 7, **characterized in that** the drive unit (18) is comprised of an electric motor (20) and a gear (21).

10. Spot welding tongs (1) according to any one of claims 1 to 9, **characterized in that** the drive unit (18) is connected with a control unit.

11. Spot welding tongs (1) according to claim 10, **characterized**
**in that** said control unit is integrated in a controller for the spot welding tongs (1).

12. Spot welding tongs (1) according to any one of claims 1 to 11, **characterized in that** a measuring element is arranged on the connector element (19) in the region of the web (33) and connected to the control unit.

13. Spot welding tongs (1) according to claim 12, **characterized**
**in that** said measuring element is formed by a force measuring sensor.

14. Spot welding tongs (1) according to claim 12, **characterized**
**in that** said measuring element is formed by a strain gauge.

## Revendications

1. Pince à souder par points (1) avec équilibrage, comprenant un corps de base (4), deux branches (6, 7) et une unité d'équilibrage (17), qui raccorde de manière mobile l'une des branches (6, 7) au corps de base (4) et est conformée de manière à convertir un mouvement de rotation en un mouvement linéaire, dans laquelle l'unité d'équilibrage (17) est constituée d'une unité d'entraînement (18) et d'un élément de liaison (19) et l'élément de liaison (19) est fixé de manière excentrique et à rotation à un disque excentrique (23) fixé à l'unité d'entraînement (18), **caractérisée en ce qu'**une partie du disque excentrique (23) se présente sous la forme d'un levier (26) avec un perçage (27) pour fixer l'élément de liaison (19) et **en ce que** l'élément de liaison (19) est conformé en arc de manière sensiblement correspondante au disque excentrique (23), dans une zone d'extrémité qui est fixée au levier par un perçage (31).

2. Pince à souder par points (1) selon la revendication 1, **caractérisée en ce que** le disque excentrique (23) présente un évidement (24) ménagé au centre pour la fixation solidaire en rotation sur l'unité d'entraînement (18).

3. Pince à souder par points (1) selon la revendication 1 ou 2, **caractérisée en ce que** l'élément de liaison (19) est conformé en nervure (33) dans la zone d'extrémité opposée de la zone d'extrémité en arc et présente un élément de fixation pour la fixation stationnaire et mobile.

4. Pince à souder par points (1) selon la revendication 3, **caractérisée en ce que** l'élément de fixation (19) se présente sous la forme d'un boulon à oeillet (34).

5. Pince à souder par points (1) selon la revendication 4, **caractérisée en ce que** le boulon à oeillet (34) est fixé de manière amovible sur l'élément de liaison (19).

6. Pince à souder par points (1) selon l'une quelconque des revendications 1 à 5, **caractérisée en ce que** l'unité d'entraînement (18) est aménagée sur le corps de base (4) de la pince.

7. Pince à souder par points selon l'une quelconque des revendications 1 à 5, **caractérisée en ce que** l'unité d'entraînement (18) est aménagée sur une des branches (6, 7) de la pince.

8. Pince à souder par points (1) selon l'une quelconque des revendications 1 à 7, **caractérisée en ce que** l'unité d'entraînement (18) est formée d'un moteur électrique (20).

9. Pince à souder par points (1) selon l'une quelconque des revendications 1 à 7, **caractérisée en ce que** l'unité d'entraînement (18) est formée d'un moteur électrique (20) et d'une transmission (21).

10. Pince à souder par points (1) selon l'une quelconque des revendications 1 à 9, **caractérisée en ce que** l'unité d'entraînement (18) est reliée à une unité de commande.

11. Pince à souder par points (1) selon la revendication 10, **caractérisée en ce que** l'unité de commande est intégrée à une commande pour la pince à souder par points (1).

12. Pince à souder par points (1) selon l'une quelconque des revendications 1 à 11, **caractérisée en ce que** l'on aménage sur l'élément de liaison (19), dans la zone de la nervure (33), un élément de mesure qui est relié à l'unité de commande.

13. Pince à souder par points (1) selon la revendication 12, **caractérisée en ce que** l'élément de mesure est formé par un capteur de mesure de force.

14. Pince à souder par points (1) selon la revendication 12, **caractérisée en ce que** l'élément de mesure est formé par un capteur extensométrique.
